# NEUE EUROPÄISCHE PATENTSCHRIFT

(11) **EP 0 794 875 B2**
(45) Veröffentlichungstag und Bekanntmachung des Hinweises auf die Entscheidung über den Einspruch: **17.09.2003**
(45) Hinweis auf die Patenterteilung: 22.04.1998
(21) Anmeldenummer: 95942638.8
(22) Anmeldetag: 14.12.1995
(51) Int. Cl.: B60J 5/04

(54) **KRAFTFAHRZEUGTÜR**
MOTOR VEHICLE DOOR
PORTIERE DE VEHICULE A MOTEUR

(30) Priorität: 14.12.1994 DE 4444406
(43) Veröffentlichungstag der Anmeldung: 17.09.1997
(73) Patentinhaber: Brose Fahrzeugteile GmbH & Co. KG, 96450 Coburg (DE)
(72) Erfinder: SZERDAHELYI, Ferenc, D-96450 Coburg (DE); STENZEL, Manfred, D-96047 Bamberg (DE)
(74) Vertreter: Müller, Wolfram Hubertus, Dipl.-Phys.
(86) Internationale Anmeldenummer: DE9501837
(87) Internationale Veröffentlichungsnummer: WO96018515

(56) Entgegenhaltungen:
- EP-A- 0 199 970
- EP-A- 0 304 769
- CA-A- 1 332 620
- DE-A- 3 311 599
- DE-A- 3 529 660
- DE-A- 3 609 609
- DE-A- 3 928 685
- DE-A- 4 212 261
- JP-A- 6 144 011
- US-A- 4 469 732
- US-A- 4 882 842
- US-A- 5 095 659
- US-A- 5 364 125

## Beschreibung

Die Erfindung betrifft eine Kraftfahrzeugtür gemäß dem Oberbegriff des Patentanspruchs 1 und ist in einer modularen Bauweise ausgeführt.

Eine derartige Kraftfahrzeugtür ist aus der DE-42 12 261 A1 bekannt, die eine Kraftfahrzeugtür mit einer Türaußenwandung und einer Türinnenwandung beschreibt, auf die ein Aufnahmeteil (Modulträger) geschraubt ist, das einen elektrischen Fensterheber und einen Kabelbaum mit mehreren Steckverbindungen trägt. Im montierten Zustand deckt das Aufnahmeteil den größten Bereich der Öffnung in der Türinnenwandung ab. Im oberen Bereich der Türinnenseite. zwischen den Kanten der Türinnenwandung und dem Aufnahmeteil ist jedoch eine Montageöffnung vorgesehen, die die Montage des Fensterhebers an die mit der Scheibenunterkante verbundene Heberschiene ermöglichen soll. Eine Türinnenverkleidung, die auch einen Türinnengriff trägt, bildet die fahrgastzellenseitige äußere Kontur der Tür.

Der beschriebene konstruktive Aufbau besitzt den Nachteil, daß das Ausnahmeteil nicht geeignet ist, den Türaußenraum weitestgehend hermetisch vom Türinnenraum abzuschließen und so einen Trockenraum zu schaffen. Wegen der verbleibenden Montageöffnungen muß zusätzlich eine großflächige Folie zur Ableitung von Wasser angebracht werden.

Aus der EP-0 492 355 B1 ist eine Tür für ein Kraftfahrzeug mit einem Aggregateträger bekannt, der aus dem Türinnenblech herausgeschnitten wurde und fast die gesamte Fläche des unter der Gürtellinie liegenden Türkörpers einnimmt. Am Umfang verteilte Befestigungslaschen am Türinnenblech sowie am Aggregateträger dienen zur Verbindung der beiden Teile, wobei zwischen benachbarten Befestigungslaschen zwangsläufig Freiräume verbleiben. Im Material des Aggregateträgers sind mehrere Montageöffnungen vorgesehen, die beispielsweise eine Verbindung des Fensterhebers mit der Fensterscheibe ermöglichen sollen.

Auch bei dieser Lösung ist eine separate Abdichtung des Türinnenraumes gegen eindringendes Wasser notwendig, wenn man auf teure wassergeschützte Ausführungen elektrischer Aggregate (z.B. Elektromotor) und Steckverbindungen verzichten will.

Die DE-35 29 660 C2 beschreibt einen Kabelbaum für eine Kraftfahrzeugtür, der auf eine Trägerplatte der Innenverkleidung montiert, die die Öffnung im Türinnenblech weitestgehend gegen Wasser abdichtet. Lediglich im unteren Bereich der Trägerplatte sind zwei Kabeldurchführungen vorgesehen, über die ein Elektromotor sowie die Zentralverriegelung mit Energie versorgt werden sollen. Eine Abdichtung der Kabeldurchführungen ist nicht vorgesehen. Eine andere Variante geht von einer Tür mit einem Türinnenblech aus, das einige Montageöffnungen aufweist. Der Kabelbaum mit seinen Steckverbindungen ist auf der Türinnenverkleidung montiert.

Auch diese technische Lösung weist die schon voran beschriebenen Nachteile der Notwendigkeit separater Abdichtmaßnahmen bzw. teurer Naßraumausführungen elektrischer Baukomponenten auf.

Aus der DE 29 28 685 C1 ist eine Vorrichtung zum Befestigen einer Fensterheber-Grundplatte an der Innenwand einer Kraftahrzeugtür bekannt, bei der ein Teil des äußeren Umfangs der Fensterheber-Grundplatte mit einem biegsamen, strangförmigen Dichtungsprofil verbunden ist, das im montierten Zustand des Fensterhebers dichtend an der Türinnenwand der Kraftfahrzeugtür anliegt, in der eine der Umrißlinie der Fensterheber-Grundplatte entsprechende Aussparung vorgesehen ist. Mit der Montage der Fensterheber-Grundplatte auf der Türinnenwand der Kraftfahrzeugtür ist zwar die Aussparung 14 verschlossen, jedoch bedarf es zusätzlicher Handgriffe zur Justierung des Fensterhebers durch weitere, von der Aussparung getrennte Öffnungen.

Aus der JP 6-144011 (A) ist eine wasserdichte Konstruktion für eine Kraftfahrzeugtür bekannt, bei der die Türinnenwand mit einer Ausnehmung versehen ist. Bei dieser Vorrichtung wird ein Verbindungsdeckel von der Außenseite der geschlossenen Trägerplatte mit dazwischen angeordnetem Dichtungsmaterial befestigt. Erst nach der Montage weiterer Verbindungsgestänge erfolgt die Abdeckung von Öffnungen im Türinnenblech, die nach der Montage des Verbindungsdeckels verbleiben.

Die CA-A-1 332 620 offenbart eine Kraftfahrzeugtür mit einer Türaußenwand, einer Türinnenwand sowie einem Türmodul, das in die Türinnenwand einsetzbar ist Das Türmodul tragt sämtliche Funktionseinheiten der Kraftfahrzeugtür. Über dem Türmodul ist eine Türinnenverkleidung befestigt. In einem Ausführungsbeispiel ist im Türmodul ein Trockenraum ausgebildet, der einen Türöffner, eine elektrische Kontrolleinheit und einen Lautsprecher enthält Der Trockenraum wird aus einem entsprechend ausgedellten und nicht durchbrochenen Bereich des Türmoduls, einem diesem gegenüberliegenden Bereich der Türinnenverldeidung und entsprechenden Dichtflächen zwischen Türmodul und Türinnenverkleidung ausgebildet.

Eine lokal begrenzte Montageöffnung im Türmodul bzw. in der Türinnenwand, die eine Verbindung eines Fensterhebers mit einer Fensterscheibe ermöglicht, ist nicht vorgesehen.

Der Erfindung liegt die Aufgabe zugrunde, eine Kraftfahrzeugtür mit lokal begrenzten Montageöffnungen zur problemlosen Montage einer Fensterscheibe an einen Fensterheber zu entwickeln, die ohne zusätzliche separate Dichtungsmittel für diese Montageöffnungen eine Unterteilung des Türkörpers in einen außenliegenden Naßraum und einen innenliegenden Trockenraum bei einfacher Montage erlaubt und einen modularen Aufbau der Fahrzeugtür ermöglicht.

Erfindungsgemäß wird diese Aufgabe durch eine Kraftfahrzeugtür mit den Merkmalen des Patentanspruches 1 gelöst. Die Unteransprüche geben Vorzugsvarianten der Erfindung an.

Demgemäß ist wenigstens eine der Montageöffnungen durch eine Funktionseinheit abgeschlossen, z.B. eine manuelle Betätigungseinheit für das Türschloß oder einen Seiten-Airbag oder eine Einheit zur Fortleitung bzw. Verteilung von Antriebsenergie oder - signalen, oder eine sonstige Funktionseinheit.

Nach der vorliegenden Erfindung wird eine notwendigerweise vorgesehene Montageöffnung für die Montage einer Fensterscheibe an einen Fensterheber nicht durch eine an sich wertlose Abdeckung abgeschlossen, sondern in kostengünstiger und platzsparender Weise durch eine ohnehin in der Tür vorgesehene Funktionseinheit. Eine vorhandene Montageöffnung wird damit auf zusätzliche Art und Weise eingesetzt, nämlich zur Aufnahme einer Funktionseinheit.

Das Türinnenblech besitzt einen relativ großen Ausschnitt, der durch einen Modulträger wasserdicht abschließbar ist Der Modulträger weist seinerseits Montageöffnungen auf, die beispielsweise zur Herstellung der Verbindung eines Fensterhebers mit der Unterkante der Fensterscheibe dienen und anschließend durch eine Funktionseinheit verschlossen werden. Zur Verbesserung der Montageabläufe werden vorteilhafterweise die Funktionseinheiten am Modulträger vormontiert und, nachdem die Montageöffnungen ihre Funktion erfüllt haben, durch die Funktionseinheiten wasserdicht verschlossen.

Die Funktionsteile besitzen eine so ausreichende mechanische Stabilität, daß sie zur Abstützung eines Padding's geeignet sind und unfallbedingte Kräfte in dem geforderten Maße aufnehmen können. Bei Verwendung mehrerer Funktionseinheiten können diese miteinander in Verbindung stehen, z. B. um ein Bauteil der benachbarten Funktionseinheit abzustützen.

Vorzugsweise werden sämtliche elektrischen oder elektronischen Bauteile und Komponenten im Trockenraum des Türkörpers angeordnet, um auf teure feuchtigkeitsgeschützte Ausführungen verzichten zu können.

Die Erfindung wird nachfolgend anhand von Ausführungsbeispielen sowie den dargestellten Figuren näher erläutert.

Es zeigen:
- Figur 1a-: eine schematische Ansicht einer Fahrzeugtür mit großem Ausschnitt im Türinnenblech;

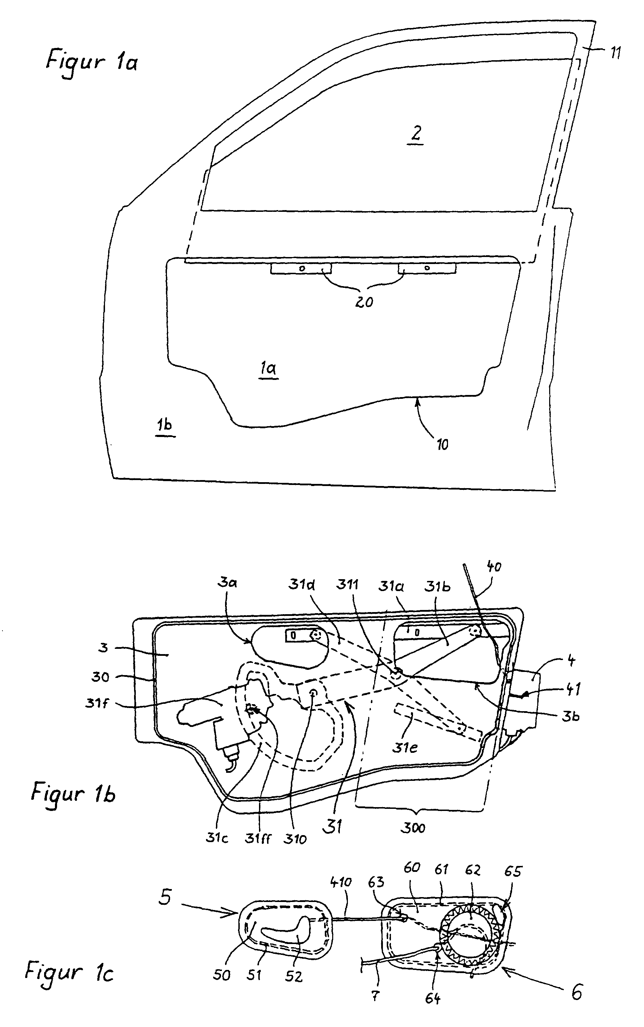

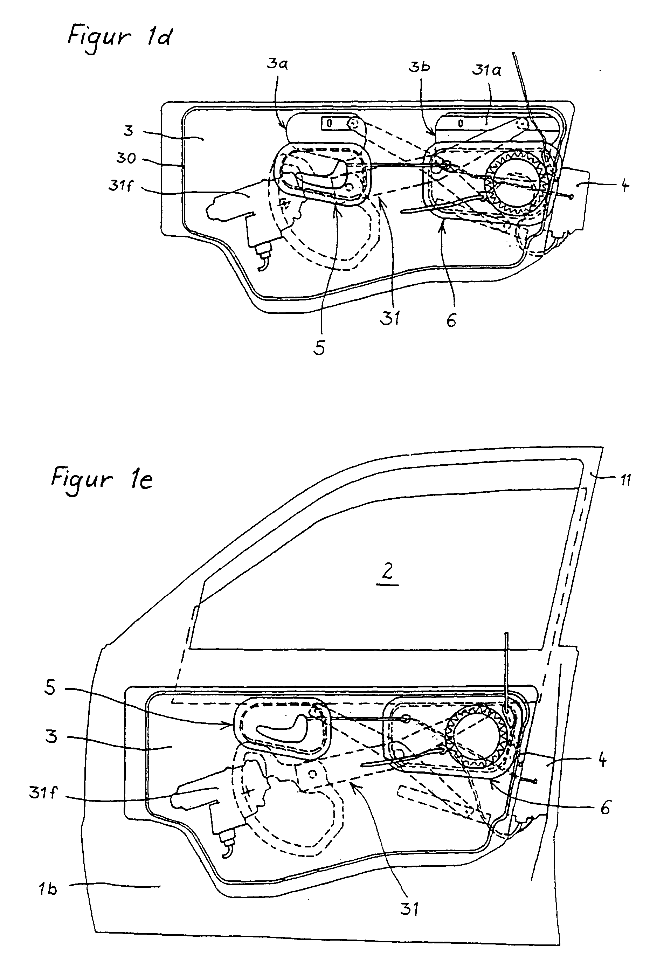

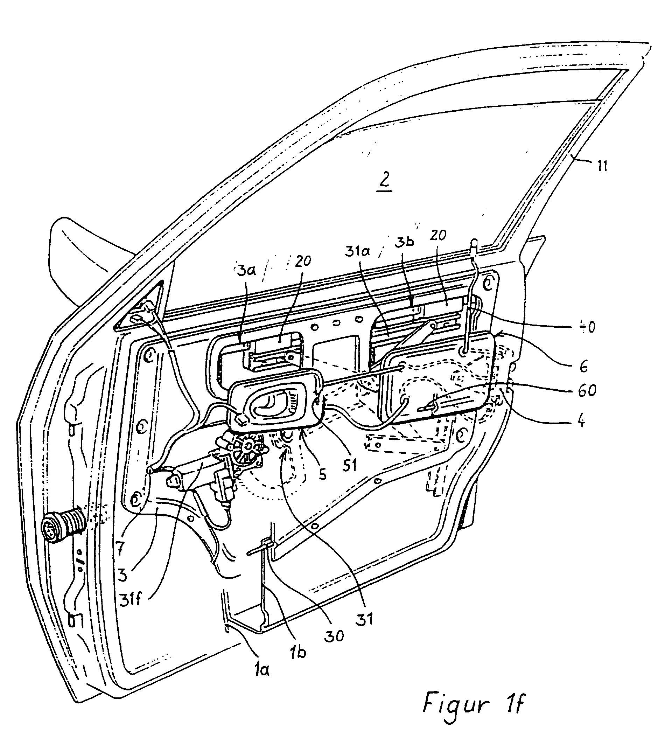

- Figur 1b-: einen Modulträger mit zwei Montageöffnungen sowie mit darauf vormontiertem elektrischen Fensterheber und Zentralverriegelungseinheit;
- Figur 1c-: eine schematische Darstellung von zwei Funktionseinheiten (manuelle Betätigungseinheit für das Türschloß und Seiten-Airbag);
- Figur 1d-: einen Modulträger mit darauf befestigten, in Transportposition befindlichen Funktionseinheiten;
- Figur 1e-: eine Fahrzeugtür im fertig montierten Zustand, bei der sich alle Bauteile in Funktionsposition befinden; und
- Figur 1f-: eine perspektivische Darstellung der Fahrzeugtür in Modulbauweise;

Die Erfindung ist besonders vorteilhaft anwendbar, wenn die Fahrzeugtür einen modularen Aufbau gemäß den Figuren 1a bis 1b aufweist. Eine schematische Ansicht des Türkörpers, bestehend aus einem Türinnenblech 1b mit einem großen Türausschnitt (Öffnung 10), durch den hindurch das Türaußenblech 1a sichtbar ist, und einem zur Führung der Fensterscheibe 2 vorgesehenen Fensterrahmen 11, zeigt Figur 1. An der Unterkante der Fensterscheibe 2 sind Befestigungselemente 20 angebracht, die der Verbindung mit der Mechanik eines Fensterhebers 31 dienen.

Zum Verschließen der Öffnung 10 im Türinnenblech 1b ist ein Modulträger 3 vorgesehen, auf dem eine Fensterhebermechanik montiert ist. Seine Hebelarme 31b, 31d lagern schwenkbar im Gelenk 311 und stehen über Schwenk-Schiebegelenke mit einer Hebeschiene 31a in Verbindung. Während das gegenüberliegende Ende des einen Hebelarms 31d in einer Führungsschiene 31e geführt wird, ist das zweite Ende des anderen Hebelarms, das auf der mit dem Modulträger 3 verbundenen Drehachse 310 lagert, als Zahnsegment 31c ausgebildet und steht mit einem Verzahnungselement des motorischen Antriebes 31 f im Eingriff. Während die Fensterhebermechanik 31 auf der der Türaußenhaut 1a zugewandten Seite angeordnet ist. befindet sich der motorische Antrieb 31f auf der anderen, der Türinnenverkleidung zugewandten Seite. Somit liegen die elektrischen/elektronischen Bauteile im sogenannten Trockenraum des Türkörpers. Die Kraftübertragung erfolgt mittels einer durch den Modulträger 3 hindurchragenden und gegen Wasserdurchtritt abgedichteten Antriebsachse 31ff.

Im oberen Bereich des Modulträgers 3 sind zwei Montageöffnungen 3a, 3b vorgesehen, durch die hindurch die Verbindung der Hebeschiene 31a mit den Befestigungselementen 20 der Fensterscheibe 2 hergestellt wird. Diese Montageöffnungen 3a, 3b werden nun nicht in üblicher Weise durch eine Folie oder durch separate Deckel oder dergleichen zum Zwecke des Feuchtigkeitsschutzes des Türinnenraumes (Trockenraumes) verschlossen; vielmehr erfolgt der Verschluß der Montageöffnungen erfindungsgemäß durch Funktionseinheiten, die ohnehin in der Tür vorgesehen sind.

Solche Funktionseinheiten können beispielsweise manuelle Betätigungen 5 für das Türschloß, ein Seiten-Airbag 6, eine elektrische Antriebseinheit oder eine Baugruppe zur Fortleitung der Antriebsenergie bzw. von Signalen sein.

An seinem Umfang trägt der Modulträger 3 eine Dichtung 30, die im Zusammenwirken mit dem Türinnenblech für einen wasserdichten Abschluß sorgen soll. Darüber hinaus ist auf dem Modulträger 3 eine Schloßeinheit 4 montiert. Sie weist einen Angriffspunkt 41 für ein Gestänge oder einen Bowdenzug zur ihrer Betätigung auf. Die Verriegelungsstange 40 durchragt die Montageöffnung 3b vom naßraumseitigen Schloß 4 kommend und ist trockenraumseitig mit ihrem oberen, freien Ende einer manuellen Betätigung zugänglich.

Das vorliegende Ausführungsbeispiel sieht gemäß der schematischen Darstellung von Figur 1c vor, eine manuelle Betätigungseinheit 5 für ein Türschloß sowie einen Seiten-Airbag 6 als Funktionseinheiten zum Verschließen der Montageöffnungen 3a bzw. 3b zu verwenden. Demnach besteht die Betätigungseinheit 5 im wesentlichen aus einer Lagerschale 50, die eine Dichtung 51 und einen Betätigungsgriff 52 trägt, wobei letzterer nach der Montage über ein Gestänge 410 (oder einen Bowdenzug 410) im Angriffspunkt 41 mit dem Türschloß 4 in Verbindung stehen wird.

Die Funktionseinheit 6 besteht im wesentlichen aus der Lagerschale 60 mit Dichtung 61 und dem Airbag-Modul 62. Des weiteren sind drei Öffnungen 63, 64, 65 für die Durchführung von Bauteilen vorgesehen, die ebenfalls abzudichten oder zumindest gegen Spritzwasser zu schützen sind. So dient die Öffnung 63 zur Durchführung des Gestänges 410 vom Handgriff 52 zu dem im Naßraum angeordneten Türschloß 4. Durch die Öffnung 64 ist ein Kabel 7 gesteckt, das ebenfalls das Schloß 4 versorgt und so die Funktion der Zentralverriegelung gewährleistet. Die Öffnung 65 dient schließlich der Durchführung der Verriegelungsstange 40 vom Trockenraum in den Naßraum.

Die Lagerschalen 50, 60 und der Modulträger 3 sind so stabil ausgebildet, daß sie (insbesondere im Bereich 300) die vorgesehenen Stützkräfte übertragen können. Dadurch kann die Gefahr unfallbedingter Verletzungen bzw. der Grad der Schwere solcher Verletzungen herabgesetzt werden.

Figur 1d zeigt die Funktionseinheiten 5, 6 in einem vormontierten Transportzustand am Modulträger 3, wobei die Montageöffnungen 3a, 3 b nur soweit verdeckt sind, daß eine problemlose Montage des Fensterhebers 31 erfolgen kann. Das dargestellte Modul besitzt einen hohen Integrationsgrad und ist geeignet, wesentliche Verbesserungen hinsichtlich des Montageablaufes und somit auch eine Kostenersparnis zu ermöglichen. Erfindungsgemäß besitzen die Funktionseinheiten 5, 6 eine Doppelfunktion: Neben dem eigentlichen Verwendungszweck dienen sie zum Verschließen der Montageöffnungen 3a, 3b. Dadurch werden separate Maßnahmen zur Abdichtung eingespart. Nach Abschluß der Montage aller Baugruppen bzw. Funktionseinheiten 5, 6 in den Türkörper befinden sich diese in Funktionspositionen, was in Figur 1e angedeutet ist.

Die perspektivische Darstellung der Fahrzeugtür in Modulbauweise gemäß Figur 1f zeigt den Zustand der Fahrzeugtür nach der Verbindung der Fensterhebermechanik31 mit der Fensterscheibe 2 und unmittelbar vor dem Verschließen der Montageöffnungen 3a, 3b durch die Funktionseinheiten 5, 6. Desweiteren ist deutlich erkennbar, daß die Fensterhebermechanik 31 im Naßraum zwischen der Türaußenhaut 1a und der Türinnenhaut 1b liegt, während die Antriebseinheit 31f im Trockenraum zwischen der Türinnenhaut 1b und der (nicht dargestellten) Türinnenverkleidung angeordnet ist.

### Bezugszeichen

- 1a-: Türaußenblech
- 1b-: Türinnenblech
- 10-: Öffnung
- 11-: Fensterrahmen
- 2-: Fensterscheibe
- 20-: Befestigungselement
- 3-: Modulträger
- 3a-: Montageöffnung
- 3b-: Montageöffnung
- 30-: Dichtung
- 31-: Fensterhebermechanik
- 31a-: Hebeschiene
- 31b-: Hebelarm
- 31c-: Zahnsegment
- 31d-: Hebelarm
- 31e-: Führungsschiene
- 31f-: motorischer Antrieb
- 31ff-: Antriebsachse
- 300-: Padding-Bereich
- 310-: Drehachse
- 311-: Gelenk
- 4-: Schloß
- 40-: Verriegelungsstange
- 41-: Angriffspunkt für Gestänge oder Bowdenzug
- 410-: Gestänge
- 5-: manuelle Betätigung für das Türschloß
- 50-: Lagerschale
- 51-: Dichtung
- 52-: Betätigungsgriff
- 6-: Funktionsteil Seiten-Airbag
- 60-: Lagerschale
- 61-: Dichtung
- 62-: Airbag-Modul
- 63-: Dichtung (möglichst wasserdicht)
- 64-: Dichtung (möglichst wasserdicht)
- 65-: Dichtung (möglichst wasserdicht)
- 7-: Kabel (Zur Versorgung von Zentralverriegelung Side-Airbag, Antriebsmotor des Fensterhebers, Lautsprecher, etc.)

## Patentansprüche

1. Kraftfahrzeugtür, bestehend aus einer Türaußenwand (1a), einer Türinnenwand (1b), einer Türinnenverkleidung, einer mittels eines Fensterhebers (31) verschiebbaren Fensterscheibe (2) sowie einem Modulträger (3) mit Funktionseinheiten (5, 6), wobei
- die Türinnenwand (1b) den Modulträger (3) trägt, und
- auf dem Modulträger (3) der Fensterheber (31) vormontiert ist,
**dadurch gekennzeichnet, daß**
- die Türinnenwand eine Öffnung (10) aufweist, die von dem Modulträger (3) verschlossen ist,
- der Modulträger (3) wenigstens eine für die Montage der Fensterscheibe (2) an den Fensterheber (31) erforderliche, lokal begrenzte Montageöffnung (3a, 3b) aufweist, und
- die wenigstens eine Montageöffnung (3a, 3b) für die Montage der Fensterscheibe (2) an den Fensterheber (31) durch eine Funktionseinheit (5, 6) wasserdicht abgeschlossen ist.

2. Kraftfahrzeugtür nach Anspruch 1, **dadurch gekennzeichnet, daß** die Stabilität der die Montageöffnung (3a, 3b,) verschließenden Funktionseinheit (5, 6) zur Abstützung eines Padding's ausreichend ist.

3. Kraftfahrzeugtür nach Anspruch 1 oder 2, **dadurch gekennzeichnet, daß** die Funktionseinheit (5) ein Türinnengriff (52) mit Lagerschale (50) und Dichtung (51) ist.

4. Kraftfahrzeugtür nach wenigstens einem der voranstehenden Ansprüche, **dadurch gekennzeichnet, daß** die Funktionseinheit (6) ein Seiten-Airbag (62) mit Trägergehäuse (60) und Dichtung (61) ist.

5. Kraftfahrzeugtür nach Anspruch 4, **dadurch gekennzeichnet, daß** das Trägergehäuse (69) des Seiten-Airbags (62) gegebenenfalls Durchführungen (63, 64, 65) für einen Kabelraum (7), einen Bowdenzug (410) und von Teilen (40) eines Gestänges aufweist.

6. Kraftfahrzeugtür nach wenigstens einem der voranstehenden Ansprüche, **dadurch gekennzeichnet, daß** sie in Modulbauweise ausgeführt ist, wobei auf dem Modulträger (3) mehrere zum Verschließen der Montageöffnung (3a, 3b) dienende Funktionseinheiten (5, 6), wie eine manuelle Betätigungseinheit (5) für ein Türschloß und ein Seiten-Airbag (6), in Transportposition vormontiert sind.

## Claims

1. Motor vehicle door consisting of a door outside wall (1a), a door inside wall (1b), a door inner lining, a window pane (2) movable by means of a window lifter (31), as well as a modular support (3) with function units (5,6) wherein
- the door inside wall (1b) supports the module support (3), and
- the window lifter (31) is prefitted on the module support (3),
**characterised in that**
- the door inside wall has an opening (10) which is closed by the module support (3),
- the module support (3) has at least one locally defined assembly opening (3a, 3b) required for fitting the window pane (2) on the window lifter (31), and
- the at least one assembly opening (3a, 3b) for fitting the window pane (2) on the window lifter (31) is closed in water-tight manner by a functional unit (5,6).

2. Motor vehicle door according to claim 1, **characterised in that** the stability of the functional unit (5,6) closing the assembly opening (3a, 3b) is sufficient to support padding.

3. Motor vehicle door according to claim 1 or 2, **characterised in that** the functional unit (5) is a door inside handle (52) with bearing shell (50) and seal (51).

4. Motor vehicle door according to at least one of the preceding claims, **characterised in that** the functional unit (6) is a side airbag (62) with support housing (60) and seal (61).

5. Motor vehicle door according to claim 4, **characterised in that** the support housing (69) of the side airbag (62) has where applicable through guides (63, 64, 65) for a cable area (7), a Bowden cable (410) and parts (40) of a rod linkage.

6. Motor vehicle door according to at least one of the preceding claims, **characterised in that** it is designed in modular construction wherein several function units (5, 6) serving for closing the assembly opening (3a, 3b), such as a manual operating unit (5) for a door lock and a side airbag (6) are prefitted in the transport position on the module support (3).

## Revendications

1. Porte pour véhicule automobile, constituée par une paroi extérieure de porte (1a), une paroi intérieure de porte (1b), un habillage intérieur de porte, une vitre (2) déplaçable au moyen d'un remonte-glace (31) et aussi un porte-modules (3) avec des unités fonctionnelles (5, 6) dans laquelle
- la paroi intérieure (1b) porte le porte-modules (3) et
- sur le porte-modules (3) est pré-assemblé le remonte-glace (31),
**caractérisée en ce que**
- la paroi intérieure de porte présente une ouverture (10) qui est obturée par le porte-modules (3),
- le porte-modules (3) présente au moins une ouverture de montage (3a, 3b) délimitée localement, nécessaire pour le montage de la vitre (2) sur le remonte-glace (31), et
- la au moins une ouverture de montage (3a, 3b) pour le montage de la vitre (2) sur le remonte-glace (31) est obturée de façon étanche à l'eau par une unité fonctionnelle (5, 6).

2. Porte pour véhicule automobile selon la revendication 1, **caractérisée en ce que** la stabilité de l'unité fonctionnelle (5, 6) obturant l'ouverture de montage (3a, 3b) est suffisante pour supporter un bourrage.

3. Porte pour véhicule automobile selon l'une des revendications 1 ou 2, **caractérisée en ce que** l'unité fonctionnelle (5) est une poignée interne de porte (52) avec un coussinet de palier (50) et un élément d'étanchéité (51).

4. Porte pour véhicule automobile selon au moins l'une des revendications précédentes, **caractérisée en ce que** l'unité fonctionnelle (6) est un coussin pneumatique de sécurité latéral (62) avec un logement de support (60) et un dispositif d'étanchéité (61).

5. Porte pour véhicule automobile selon la revendication 4, **caractérisée en ce que** le logement de support (69) du coussin pneumatique de sécurité latéral (62) présente éventuellement des passages (63, 64, 65) pour un câble sous gaine (7), une tringlerie(410) et les éléments (40) d'un système de tringlerie.

6. Porte pour véhicule automobile selon au moins l'une des revendications précédentes, **caractérisée en ce qu'**elle est de conception modulaire, plusieurs unités fonctionnelles (5, 6) servant à obturer l'ouverture de montage (3a, 3b), comme une unité d'actionnement manuel (5) pour une serrure de porte et un coussin pneumatique de sécurité latéral (6), étant pré-assemblés sur le porte-module (3) en position de transport.
